(19) **Europäisches Patentamt**
**European Patent Office**
**Office européen des brevets**

(11) **EP 3 211 850 B1**

(12) **EUROPEAN PATENT SPECIFICATION**

(45) Date of publication and mention
of the grant of the patent:
**09.01.2019 Bulletin 2019/02**

(51) Int Cl.:
***H04L 29/06*** (2006.01)     ***G06K 9/62*** (2006.01)
***H04L 1/00*** (2006.01)

(21) Application number: **15852434.8**

(22) Date of filing: **13.02.2015**

(86) International application number:
**PCT/CN2015/073058**

(87) International publication number:
**WO 2016/061964 (28.04.2016 Gazette 2016/17)**

(54) **IR STATE RETURN CYCLE SELECTION METHOD AND DEVICE FOR ROHC COMPRESSOR, AND STORAGE MEDIUM**

VERFAHREN ZUR IR-ZUSTANDSRÜCKKEHRZYKLUSAUSWAHL SOWIE ROHC-VERDICHTER UND SPEICHERMEDIUM

PROCÉDÉ ET DISPOSITIF DE SÉLECTION DE CYCLE DE RENVOI D'ÉTATS IR POUR COMPRESSEUR ROHC, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2014 CN 201410568760**

(43) Date of publication of application:
**30.08.2017 Bulletin 2017/35**

(73) Proprietor: **ZTE Corporation**
**Shenzhen, Guangdong 518057 (CN)**

(72) Inventors:
• **LIU, Xin**
**Shenzhen**
**Guangdong 518057 (CN)**
• **DONG, Jianjun**
**Shenzhen**
**Guangdong 518057 (CN)**
• **WU, Jian**
**Shenzhen**
**Guangdong 518057 (CN)**
• **LIAO, Zhaoyang**
**Shenzhen**
**Guangdong 518057 (CN)**

(74) Representative: **Brevalex**
**56, Boulevard de l'Embouchure**
**B.P. 27519**
**31075 Toulouse Cedex 2 (FR)**

(56) References cited:
**CN-A- 1 996 941      CN-A- 101 069 401**
**CN-A- 101 137 089    US-A1- 2005 090 273**
**US-A1- 2006 104 266**

• **BORMANN C ET AL: "RObust Header Compression (ROHC): Framework and four profiles: RTP, UDP, ESP, and uncompressed; rfc3095.txt", NETWORK WORKING GROUP RFC 1717, INTERNET SOCIETY (ISOC) 4, RUE DES FALAISES CH- 1205 GENEVA, SWITZERLAND, CH, 1 July 2001 (2001-07-01), XP015008878, ISSN: 0000-0003**
• **JING TANG ET AL: "Fuzzy support vector machine based on featuredata huffman compression", 2010 INTERNATIONAL CONFERENCE ON COMPUTER APPLICATION AND SYSTEM MODELING : (ICCASM 2010) ; TAIYUAN, CHINA, 22 - 24 OCTOBER 2010, IEEE, PISCATAWAY, NJ, USA, 22 October 2010 (2010-10-22), pages V11-194, XP031791382, ISBN: 978-1-4244-7235-2**

**Description**

**TECHNICAL FIELD**

The disclosure relates to the field of Robust Header Compression (ROHC) technology, and in particular to an Initialization and Refresh (IR) state return cycle selection method and device for an ROHC compressor, and a storage medium.

**BACKGROUND**

For some application layer services, the huge Internet Protocol (IP) header information costs a great amount of overhead, for example, the payload length of Voice over Internet Protocol (VoIP) service is usually 15-20 bytes, but the IP header information is 40 bytes; the header of a certain data flow usually contains a large amount of redundant information, so the ROHC technology emerges for solving the problem. There are three working modes in ROHC, which are U mode, O mode and R mode respectively. When there is not a backward channel between a compressor and an opposite decompressor, or the backward channel is not available, that is, there is only a unidirectional message (from the compressor to the decompressor), they will work in the U mode.

The ROHC compressor working in the U mode has three states, which are IR state, First Order (FO) state and Second Order (SO) state respectively in an ascending order. The compressor works in the lowest IR state, and then gradually switches to the high state. When the compressor has enough confidence to determine that the decompressor has full context for decompression, the compressor keeps working in the highest SO state.

The introduction of the IR state has two main purposes: one is to initialize static context of the compressor and the decompressor, and the other is to repair the damaged static context. In the IR state, the compressor sends an IR packet, which includes: the whole header (a static part and a dynamic part) and some extra information (e.g. an ID number of context). The compressor will keep in the IR state until it makes sure that the decompressor has received all static context information correctly.

In the U mode, once the decompressor cannot decompress correctly because of not receiving enough information, the subsequent message will be decompressed in error because of being lack of correct context. So, when there is not a feedback channel, the compressor must return to the IR state periodically, and sends complete header information to the decompressor through the IR packet, so as to enable the decompressor to obtain the complete context.

At present, RFC3095 explicitly specifies that in the U mode, the compressor must return to the IR state periodically, but an IR state return cycle is not given explicitly. The selection of the IR state return cycle will influence two indicators of a communication system: compression efficiency and packet loss rate. The compression efficiency is a ratio relationship between an ROHC compression header and an original header, and the specification can reflect bandwidth utilization from the side; and the packet loss rate is an important indicator for measuring a transmission result of the communication system; the higher the packet loss rate, the worse the quality of the communication system.

When the time length of the IR state return cycle is selected shorter, that is, the compressor returns to the IR state more frequently; because the IR packet sends the complete original header, the compression efficiency is reduced, and the bandwidth utilization is reduced; but at the same time, because the IR packet is sent more frequently, the probability of packet loss caused by continuously decompressing the message in error because of lack of the correct context can be reduced, thereby reducing the packet loss rate. Correspondingly, when the time length of the IR state return cycle is selected longer, that is, the compressor returns to the IR state rarely, the compression efficiency is enhanced, and the bandwidth utilization is improved; but because the IR packet is sent rarely, once the decompressor decompresses unsuccessfully, the decompressor may wait for the IR packet to restore before continuously decompressing more messages in error, so the packet loss rate is increased.

Obviously, the fixed IR state return cycle cannot be dynamically adjusted according to the channel quality, so the two indicators, namely the compression efficiency and the packet loss rate, of the communication system cannot be balanced.

Prior art US 2006104266 A1 acknowledges the problem of having a static value for the IR return cycle and addresses the calculation of a static return cycle value based on the spectral efficiency-channel acquisition time trade-off.

**SUMMARY**

In view of this, the disclosure is intended to provide an IR state return cycle selection method and device for an ROHC compressor, and a storage medium, so as to at least ease the conflict of being hard to bring balance between the two indicators, namely the compression efficiency and the packet loss rate.

The technical solutions of the disclosure are implemented as follows.

The first aspect of the disclosure provides an IR state return cycle selection method for an ROHC compressor, which includes that:

a current channel quality parameter is obtained and sent to a trained Support Vector Machine (SVM), and the SVM is used to select an IR state return cycle according to the current channel quality parameter; and

an IR state return cycle of the ROHC compressor is adjusted according to the IR state return cycle selected by the SVM.

In the above solution, before the SVM is used to select the IR state return cycle according to the current channel quality parameter, the method further includes that:

a sample set is obtained;

the sample set is used to train the SVM.

In the above solution, that the sample set is obtained includes that:

a sample channel quality parameter is obtained; and

the optimal IR state return cycle corresponding to the sample channel quality parameter is calculated.

In the above solution, that the optimal IR state return cycle corresponding to the sample channel quality parameter is calculated includes that:

an overall gain set corresponding to a target IR state return cycle set when the channel quality is the sample channel quality parameter is calculated; and

according to the calculated overall gain set, the optimal IR state return cycle corresponding to the sample channel quality parameter is selected.

In the above solution, that the sample set is used to train the SVM includes that:

training data is constructed to train the SVM which can select between two IR sate return cycles;

a discriminant function is constructed, the constructed training data is used to determine a parameter of the discriminant function, and two modes corresponding to the two IR state return cycles are separated correctly; and

the SVM is extended as an SVM that can select among N IR state return cycles,

where N is an integer greater than 2.

The second aspect of the disclosure provides an IR state return cycle selection device for an ROHC compressor, which includes: a selecting module and an adjusting module;
the selecting module is arranged to obtain the current channel quality parameter, send the parameter to the trained SVM, and use the SVM to select the IR state return cycle according to the current channel quality parameter; and
the adjusting module is arranged to adjust the IR state return cycle of the ROHC compressor according to the IR state return cycle selected by the SVM.
In the above solution, the device further includes an SVM module; the SVM module includes:

a sample set obtaining unit arranged to obtain the sample set; and

a training unit arranged to use the sample set to train the SVM.

In the above solution, the sample set obtaining unit includes:

a parameter obtaining subunit arranged to obtain the sample channel quality parameter; and

a calculating subunit arranged to calculate the optimal IR state return cycle corresponding to the sample channel quality parameter.

In the above solution, the calculating subunit includes:

an overall gain calculating subunit arranged to calculate the overall gain set corresponding to the target IR state return cycle set when the channel quality is the sample channel quality parameter; and

a selecting subunit arranged to, according to the calculated overall gain set, select the optimal IR state return cycle corresponding to the sample channel quality parameter.

In the above solution, the training unit includes:

a data constructing subunit arranged to construct the training data to train the SVM which can select between two IR sate return cycles;

a function constructing subunit arranged to construct the discriminant function, use the constructed training data to determine the parameter of the discriminant function, and separate two modes corresponding to the two IR state return cycles correctly;

an extending subunit arranged to extend the SVM as the SVM that can select among N IR state return cycles,

where N is an integer greater than 2.

The third aspect of the disclosure provides a computer storage medium having stored thereon computer executable instructions used for performing at least one of the methods provided in the first aspect of the disclosure.
According to the IR state return cycle selection method and device for an ROHC compressor, and a storage medium provided by the disclosure, by introducing an SVM, and using the channel quality parameter sample set and the optimal IR state return cycle corresponding to the parameter sample set to train the SVM, the trained SVM can be used to select for the ROHC compressor the optimal IR state return cycle under the current channel quality; the method is simple and practicable, and can adjust the IR state return cycle adaptively under different channel conditions and balance best the two important communication system indicators, namely the compression efficiency and the packet loss rate.

## BRIEF DESCRIPTION OF THE DRAWINGS

Fig. 1 is a flowchart of an IR state return cycle selection method for an ROHC compressor provided by an embodiment of the disclosure;

Fig. 2 is a schematic diagram of an SVM for determining a better value between two IR state return cycles provided by an embodiment of the disclosure;

Fig. 3 is a schematic diagram of an SVM for determining one by one a better value among multiple IR state return cycles provided by an embodiment of the disclosure; and

Fig. 4 is a structure diagram of an IR state return cycle selection device for an ROHC compressor provided by an embodiment of the disclosure.

## DETAILED DESCRIPTION

The preferred embodiments of the disclosure are elaborated below in combination with the accompanying drawings. It should be understood that the preferred embodiments elaborated below are only used for illustrating the disclosure and not intended to limit the disclosure.
In the embodiment of the disclosure, for enabling an ROHC compressor of the communication system to select the optimal IR state return cycle according to the channel quality, an SVM is introduced and trained by using a channel quality parameter sample set and the optimal IR state return cycle corresponding to the parameter sample set, and then the trained SVM can be used to select for the ROHC compressor the optimal IR state return cycle under the current channel quality. The SVM is a data mining method based on statistic learning theory, it has many particular advantages in solving the problem of small-sample, nonlinear and high-dimensional mode recognition, and largely overcomes the problems like curse of dimensionality and overfitting. The principle of the SVM is searching an optimal classification hyperplane meeting a classification requirement, and maximizing blank areas at two sides of the hyperplane while making the hyperplane ensure the classification accuracy. In theory, the SVM can realize the optimal classification of linear separable data.

Here, the optimal IR state return cycle is the IR state return cycle maximizing the overall gain of the two factors, namely the compression efficiency and the packet loss rate, of the communication system.

Obviously, in a communication system implementing ROHC, the SVM can be implanted in or separated from the ROHC compressor. In order to describe conveniently, the embodiments where the SVM is implanted in the ROHC compressor are mainly described below.

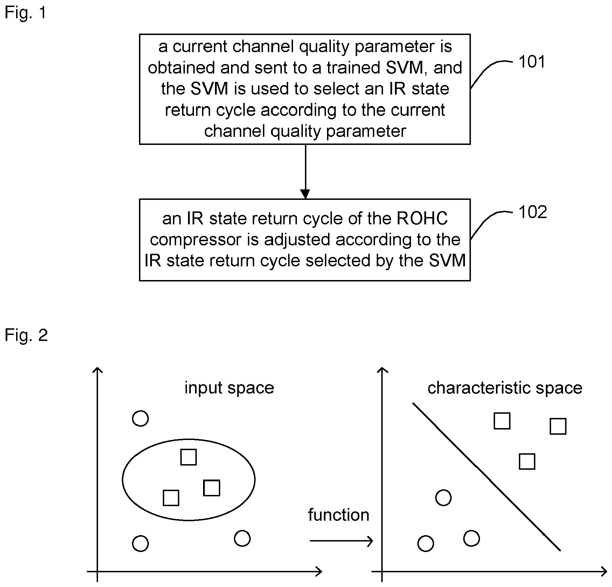

Fig. 1 is a flowchart of an IR state return cycle selection method for an ROHC compressor provided by an embodiment of the disclosure. As shown in Fig. 1, the method includes the following steps.

Step 101: a current channel quality parameter is obtained and sent to a trained SVM, and the SVM is used to select an IR state return cycle according to the current channel quality parameter;

specifically, in the communication system, a base station side and a terminal side obtain the current channel quality parameter by measuring an idle interface, and then the ROHC compressor can obtain the current channel quality parameter from a base station system and send the parameter to the trained SVM; the SVM selects the optimal IR state return cycle according to the received current channel quality parameter, and returns the selection result to the ROHC compressor, herein the channel quality parameter may include a parameter signal receiving power and a Signal Interference Noise Ratio (SINR).

Here, the trained SVM is the SVM trained by using a sample set. Before Step 101, the method further includes that:

a sample set is obtained; and
the sample set is used to train the SVM.

Specifically, the basis of training the SVM is obtaining the sample set; in the embodiment of the disclosure, the sample in the sample set used to train the SVM includes two parts: a sample channel quality parameter and the optimal IR state return cycle corresponding to the channel quality parameter. Here, the sample channel quality parameter may include: a reference signal receiving power and the SINR, herein the reference signal receiving power is denoted as $P_{rsrp}$, and the SINR is denoted as $P_{noise}$, and they form a group of characteristic parameter vectors

$$x = \left[ P_{rsrp}, P_{noise} \right].$$

The sample channel quality parameter in a sample can be preset or obtained by a network administrator by observing and testing the communication system; it is needed to calculate the optimal IR state return cycle corresponding to the sample channel quality parameter. So, that the sample set is obtained includes that:

the sample channel quality parameter is obtained; and
the optimal IR state return cycle corresponding to the sample channel quality parameter is calculated.

Optionally, after determining that the sample channel quality parameter is the characteristic parameter vectors $x = [P_{rsrp}, P_{noise}]$, calculating the optimal IR state return cycle corresponding to the characteristic parameter vectors $X = [P_{rsrp}, P_{noise}]$ specifically includes the following steps.

Step 11: the overall gain set corresponding to a target IR state return cycle set when the channel quality is the sample channel quality parameter is calculated; that is, the overall gain set corresponding to the target IR state return cycle set when $x = [P_{rsrp}, P_{noise}]$ is calculated;

specifically, a target IR state return cycle set can be predetermined, and some target IR state return cycle values are selected as elements of the target IR state return cycle set, and then the IR state return cycle of the ROHC compressor is selected from the target IR state return cycle set. In an embodiment, if the IR state return cycle value is too high, for example, the IR state return cycle value is greater than 500, compared with cases where the IR state return cycle value is equal to 500, the influence on the compression efficiency and the packet loss rate of the communication is almost the same, so it is feasible to predetermine, according to experience, the target IR state return cycle set $D$ as {$d_{IR1}$ = 10, $d_{IR2}$ = 20, $d_{IR3}$ = 50, $d_{IR4}$ = 100, $d_{IR5}$ = 200, $d_{IR6}$ = 500}, where $d_{IRi}$ represents an IR state return cycle value, for example, when $d_{IR1}$ = 10, it means that an IR packet is contained in each 10 data packets; then, for any element $d_{IRi}$ of D, when the statistic time is T, the overall gain of the compression efficiency and the packet loss rate is $C_i(d_{IRi}, T) = S_{comp}(d_{IRi}) * S_{loss}(T)$, where $i$ = 1,2,3,4,5,6, $S_{comp}(d_{IRi})$ and $S_{loss}(T)$ are as follows:

$$S_{comp}(d_{IRi}) = \frac{(\hat{l}+3)/d_{IRi} + \hat{k}(1-1/d_{IRi})}{\hat{l}} \quad (1)$$

where, $\hat{l}$ is the average length of the original header, and $\hat{k}$ is the average length of a compression header of a non-IR packet; $\hat{l}$ and $\hat{k}$ can be obtained by the network administrator by observing and making statistic.

$$S_{loss}(T) = 1 - \frac{p(T)}{nT} \quad (2)$$

where, $p(T)$ is the total amount of lost packet in the statistic time T, n is the number of packets transmitted per second, $p(T)$ and n can be obtained through observation by a Web administrator.

Apparently, the greater $C_i(d_{IRi}, T)$ is, the higher the compression efficiency is and the lower the packet loss rate is, namely the higher bandwidth utilization and the better communication quality; the smaller $C_i(d_{IRi}, T)$ is, the lower the compression efficiency is and the higher the packet loss rate is, namely the lower bandwidth utilization and the worse communication quality.

In an embodiment, $T$ = 20$s$, that is, the statistic time is 20 seconds; the overall gain $C_i(d_{IRi}, T)$ corresponding to each element in the IR state return cycle set is calculated to form the overall gain set $C_i(d_{IRi}, T)$ corresponding to the IR state return cycle set.

Step 12: according to the calculated overall gain set, the optimal IR state return cycle corresponding to the sample channel quality parameter is selected; that is, according to the overall gain $C_i(d_{IRi}, T)$, the optimal IR state return cycle corresponding to the characteristic parameter vector $x = [P_{rsrp}, P_{noise}]$ is selected;

Specifically, the maximum overall gain $C = \max(C(d_{IRi}, T))$ in the overall gain set is calculated, namely

$$C = \max[C(d_{IR1}, T), C(d_{IR2}, T), C(d_{IR3}, T), C(d_{IR4}, T), C(d_{IR5}, T), C(d_{IR6}, T)] \quad (3),$$

and the element $d_{max}$ in the target IR state return cycle set corresponding to the maximum overall gain is obtained, then the element $d_{max}$ is the optimal IR state return cycle corresponding to the characteristic parameter vector $x = [P_{rsrp}, P_{noise}]$.

The $x = [P_{rsrp}, P_{noise}]$ and the optimal IR state return cycle $d_{max}$ corresponding to it can form a sample, by this analogy, some different channel quality parameters are set, and the optimal IR state return cycles corresponding to them are calculated, that is, multiple samples are obtained to form a sample set; then the specific method of using the sample set to train the SVM includes the following steps.

Step A: training data is constructed to train the SVM which can select between two IR sate return cycles; specifically, two IR sate return cycles are selected, and a group of training data is constructed aiming at the two IR sate return cycles, namely

$$(x_1, y_1), ..., (x_l, y_l), x_i \in R^n, y_i \in \{+1, -1\}, \quad i = 1, 2, ..., l \quad (4)$$

where, $x_i = [P_{rsrp}, P_{noise}]$ is the characteristic parameter vector corresponding to the sample channel quality parameter, $y_i$ is an index aiming at the selected two IR sate return cycles, $l$ is the total amount of the constructed training data. When a better IR state return cycle of $x_i$ is the first selected IR state return cycle, it is marked as $y_i$ = 1, or else, it is marked as $y_i$ =-1.

Step B: a discriminant function is constructed, the training data constructed in Step A is used to determine the parameter of the discriminant function, and two modes are separated as correctly as possible; specifically, the characteristic parameter vector $x$ corresponding to the actual channel quality parameter of the communication system is regarded as an input of the discriminant function, and the better IR sate return cycle is selected for $x$ from the two IR sate return cycles selected in Step A by using the discriminant function; the general formula of the discriminant function is:

$$\phi(w) = \frac{1}{2}\|w\|^2 + c\sum_{i=1}^{l}\xi \quad (5)$$

the general formula of the discriminant function is transformed into a typical Quadratic Programming (QP) problem, and its constraint condition is:

$$y_i(w\cdot x - b') + \xi \geq 1, \xi \geq 0, \quad i = 1,2,...,l \quad (6)$$

where, W is a weight coefficient vector of a classification plane, $b'$ is a classification threshold, $c > 0$ is a self-defined penalty coefficient, $\xi$ can be regarded as a deviation of a training sample about a separation hyperplane; when the training data can be separated linearly, $\xi = 0$; when the training data cannot be separated, or whether the training data can be separated linearly is not known in advance, $\xi > 0$.

The discriminant function is solved by using the standard Lagrange multiplier method to obtain the final classification function:

$$f(x) = \text{sgn}[\sum_{i=1}^{l} a_i y_i(x_i x) + b'] \quad (7)$$

where, $a_i$ is the Lagrange multiplier, and $b'$ is the classification threshold. For a nonlinear situation, a separation surface is introduced; according to the functional theory, when the Mercer condition is satisfied, a proper kernel function $k(x_i, x)$ is defined to realize nonlinear mapping; as shown in Fig. 2, input space $R^n$ is mapped to high-dimensional inner product space $F$ through the nonlinear mapping $\phi(x) : R^n \to F$, then the optimal hyperplane is constructed in F, and classification is completed by using a linear classifier. After introducing the kernel function, the formula (7) changes to:

$$f(x) = \text{sgn}[\sum_{i=1}^{l} a_i y_i K(x_i, x) + b'] \quad (8)$$

where, $K(x_i, x) = \phi(x_i)\cdot\phi(x)$ is the kernel function satisfying the Mercer condition. The classification function is constructed by introducing the kernel function, so as to complete the initial construction of the SVM.

Step C: the SVM is extended as the SVM that can select among N IR state return cycles, where N is an integer greater than 2.

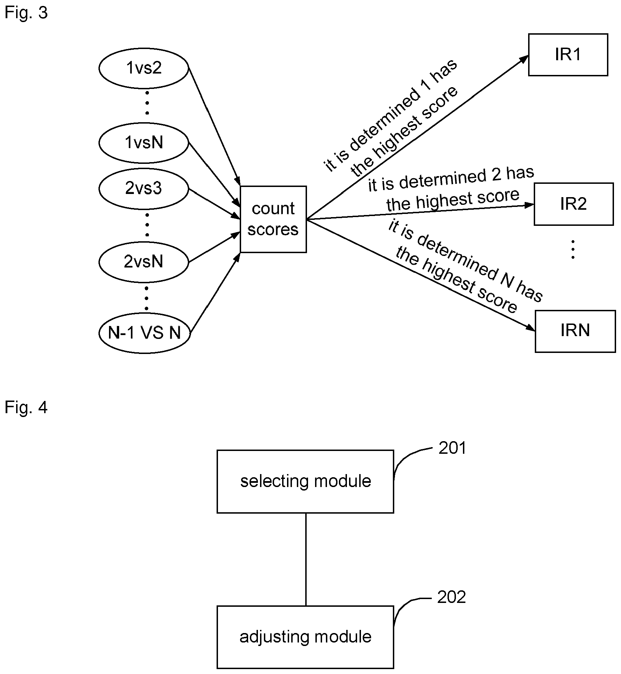

The SVM of initial construction can only search the relatively better one from the two given IR state return cycles; based on Step B, a one-to-one method can be adopted to search the optimal value from the N given IR state return cycles; as shown in Fig. 3, supposing that there are N given IR state return cycles, and two different IR state return cycles are selected to form an SVM sub-classifier, then it is needed to construct 1/2*N*(N-1) SVM sub-classifiers.

For any two return cycles i ($i = 1,2,...,N, i \neq j$) and j ($j = 1,2,...,N, j \neq i$) in the N given IR state return cycles, the specific method for constructing the SVM sub-classifiers of the return cycles i and j is that:

the training data is constructed according to the method in Step A; namely,

the samples belonging to the return cycles i and j are selected from the obtained sample set for training the SVM as training sample data, and the index corresponding to the sample belonging to the return cycle i is marked as +1, and the index corresponding to the sample belonging to the return cycle j is marked as -1;

the discriminant function is constructed according to the method in Step B; the discriminant function is the SVM sub-classifier of the return cycles i and j.

After the SVM sub-classifier of any two return cycles i and j in the N IR state return cycles is constructed, the work of extending the SVM as the SVM that can select among the N IR state return cycles is completed.

In the embodiment of the disclosure, N=6, and the target IR state return cycle set is {$d_{IR1} = 10$, $d_{IR2} = 20$, $d_{IR3}$

= 50, $d_{IR4}$ = 100, $d_{IR5}$ = 200, $d_{IR6}$ = 500}, where, $d_{IRi}$ is an IR state return cycle value, for example, when $d_{IR1}$ = 10 , it means that an IR packet is contained in each 10 data packets.

After the SVM is trained according to the above method, the trained SVM can be used to select the IR state return cycle according to the current channel quality parameter as described in Step 101.

Specifically, the characteristic parameter vector $x_i$ = $[P_{rsrpi}, P_{noisei}]$ representing the current wireless channel condition is input, and the vector is used to select the better one from the two IR state return cycles in Step B for the 1/2*N*(N-1) SVM sub-classifiers; scores of each return cycle are accumulated, and the IR state return cycle corresponding to the highest score is selected as the optimal IR return cycle of test data.

Step 102: the IR state return cycle of the ROHC compressor is adjusted according to the IR state return cycle selected by the SVM.

Specifically, the ROHC compressor adjusts the IR state return cycle to the IR state return cycle value selected by the SVM, so that self-adaptive change of the IR state return cycle under any channel condition can be completed.

According to the IR state return cycle selection method for an ROHC compressor provided by the present embodiment, by introducing the SVM, and using the channel quality parameter sample set and the optimal IR state return cycle corresponding to the parameter sample set to train the SVM, the trained SVM can be used to select for the ROHC compressor the optimal IR state return cycle under the current channel quality; the method is simple and practicable, and can adjust the IR state return cycle adaptively under different channel conditions and balance best the two important communication system indicators, namely the compression efficiency and the packet loss rate.

Fig. 4 is a structure diagram of an IR state return cycle selection device for an ROHC compressor provided by an embodiment of the disclosure. As shown in Fig. 4, the IR state return cycle selection device includes: a selecting module 201 and an adjusting module 202;

the selecting module 201 is arranged to obtain the current channel quality parameter, send the parameter to the trained SVM, and use the SVM to select the IR state return cycle according to the current channel quality parameter; and

the adjusting module 202 is arranged to adjust the IR state return cycle of the ROHC compressor according to the IR state return cycle selected by the SVM.

Optionally, the IR state return cycle selection device further includes an SVM module; the SVM module includes:

a sample set obtaining unit arranged to obtain the sample set; and

a training unit arranged to use the sample set to train the SVM.

Optionally, in the IR state return cycle selection device, the sample set obtaining unit includes:

a parameter obtaining subunit arranged to obtain the sample channel quality parameter; and

a calculating subunit arranged to calculate the optimal IR state return cycle corresponding to the sample channel quality parameter.

Optionally, in the IR state return cycle selection device, the calculating subunit includes:

an overall gain calculating subunit arranged to calculate the overall gain set corresponding to the target IR state return cycle set when the channel quality is the sample channel quality parameter; and

a selecting subunit arranged to, according to the calculated overall gain set, select the optimal IR state return cycle corresponding to the sample channel quality parameter.

Optionally, in the IR state return cycle selection device, the training unit includes:

a data constructing subunit arranged to construct the training data to train the SVM which can select between two IR sate return cycles;

a function constructing subunit arranged to construct the discriminant function, use the constructed training data to determine the parameter of the discriminant function, and separate two modes corresponding to the two IR state return cycles correctly;

an extending subunit arranged to extend the SVM as the SVM that can select among N IR state return cycles,

where N is an integer greater than 2.

In practical application, all the modules and units can be realized by various types of processors in the ROHC compressor; the processor can be a Central Processing Unit (CPU), a Micro Processing Unit (MPU), an Application Processor (AP) or a Field Programmable Gate Array (FPGA), and other processors or processing chips with an information processing function. These modules and units can correspond to different processors separately or correspond to the same processor by means of integration; when any two modules and/or units correspond to the same processor by means of integration, the processor completes the functions of different modules or units separately by adopting time division multiplexing or thread concurrency. For example, the processor performs operations of these modules and/or units by executing specified codes.

The embodiment of the disclosure also provides a computer storage medium, in which a computer executable instruction is stored; the computer executable instruction is used for performing at least one of the method provided by the embodiment of the disclosure, specifically the method shown in Fig. 1.

The computer storage medium can be a USB flash disk, a mobile hard disk, a Read-Only Memory (ROM), a Random Access Memory (RAM), a magnetic disk or a compact disc, and other media which can store program codes; during specific implementation, the computer storage medium can be a non-instantaneous storage medium.

Those skilled in the art should understand that the embodiments of the disclosure can be provided as a method, a system or a computer program product. Thus, forms of hardware embodiments, software embodiments or embodiments integrating software and hardware can be adopted in the disclosure. Moreover, a form of the computer program product implemented on one or more computer available storage media (including, but not limited to, a disk memory, an optical memory and the like) containing computer available program codes can be adopted in the disclosure.

The disclosure is described with reference to flowcharts and/or block diagrams of the method, the equipment (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

These computer program instructions can also be stored in a computer readable memory capable of guiding the computers or the other programmable data processing devices to work in a specific mode, so that a manufactured product including an instruction apparatus is generated via the instructions stored in the computer readable memory, and the instruction apparatus realizes the functions assigned in one or more flows of the flowcharts and/or one or more blocks of the block diagrams.

These computer program instructions can also be loaded to the computers or the other programmable data processing devices, so that processing realized by the computers is generated by executing a series of operation steps on the computers or the other programmable devices, and therefore the instructions executed on the computers or the other programmable devices provide a step of realizing the functions assigned in one or more flows of the flowcharts and/or one or more blocks of the block diagrams.

The above is only the preferred embodiments of the disclosure and not intended to limit the scope of protection of the disclosure. Any modification made according to the principle of the disclosure should fall within the protection scope of the disclosure as presented in the appended claims.

**Claims**

1. An Initialization and Refresh, IR, state return cycle selection method for a Robust Header Compression, ROHC, compressor in a communication system, comprising:

   obtaining a current communication channel quality parameter, sending the parameter to a trained Support Vector Machine, SVM, and using the SVM to select an IR state return cycle according to the current channel quality parameter (101);
   adjusting an IR state return cycle of the ROHC compressor according to the IR state return cycle selected by the SVM (102).

2. The IR state return cycle selection method according to claim 1, further comprising: before using the SVM to select the IR state return cycle according to the current channel quality parameter,
   obtaining a sample set; and
   using the sample set to train the SVM.

**3.** The IR state return cycle selection method according to claim 2, wherein obtaining the sample set comprises:

obtaining a sample channel quality parameter; and
calculating an optimal IR state return cycle corresponding to the sample channel quality parameter.

**4.** The IR state return cycle selection method according to claim 3, wherein calculating the optimal IR state return cycle corresponding to the sample channel quality parameter comprises:

calculating an overall gain set corresponding to a target IR state return cycle set when a channel quality is the sample channel quality parameter;
according to the calculated overall gain set, selecting the optimal IR state return cycle corresponding to the sample channel quality parameter.

**5.** The IR state return cycle selection method according to claim 2, wherein using the sample set to train the SVM comprises:

constructing training data to train the SVM which can select between two IR sate return cycles;
constructing a discriminant function, using the constructed training data to determine a parameter of the discriminant function, and separating two modes corresponding to the two IR state return cycles correctly;
extending the SVM as an SVM that can select among N IR state return cycles,
where N is an integer greater than 2.

**6.** An Initialization and Refresh, IR, state return cycle selection device for a Robust Header Compression, ROHC, compressor in a communication system, comprising: a selecting module (201) and an adjusting module (202); the selecting module is arranged to obtain a current communication channel quality parameter, send the parameter to a trained Support Vector Machine, SVM, and use the SVM to select an IR state return cycle according to the current channel quality parameter; and
the adjusting module is arranged to adjust an IR state return cycle of the ROHC compressor according to the IR state return cycle selected by the SVM.

**7.** The IR state return cycle selection device according to claim 6, further comprising an SVM module,
the SVM module comprising:

a sample set obtaining unit arranged to obtain a sample set; and
a training unit arranged to use the sample set to train the SVM.

**8.** The IR state return cycle selection device according to claim 7, wherein the sample set obtaining unit comprises:

a parameter obtaining subunit arranged to obtain a sample channel quality parameter; and
a calculating subunit arranged to calculate an optimal IR state return cycle corresponding to the sample channel quality parameter.

**9.** The IR state return cycle selection device according to claim 8, wherein the calculating subunit comprises:

an overall gain calculating subunit arranged to calculate an overall gain set corresponding to a target IR state return cycle set when a channel quality is the sample channel quality parameter; and
a selecting subunit arranged to, according to the calculated overall gain set, select the optimal IR state return cycle corresponding to the sample channel quality parameter.

**10.** The IR state return cycle selection device according to claim 7, wherein the training unit comprises:

a data constructing subunit arranged to construct training data to train the SVM which can select between two IR sate return cycles;
a function constructing subunit arranged to construct a discriminant function, use the constructed training data to determine a parameter of the discriminant function, and separate two modes corresponding to the two IR state return cycles correctly;
an extending subunit arranged to extend the SVM as an SVM that can select among N IR state return cycles,
where N is an integer greater than 2.

**11.** A computer storage medium having stored thereon computer executable instructions which, when the said instructions are executed by a computing device, cause the computing device to carry out the methods according to claims 1 to 5.

**Patentansprüche**

**1.** Initialisierungs- und Aktualisierungs, IR, -Statusrückführungszyklusauswahlverfahren für einen Robust Header Compression, ROHC, -Kompressor in einem Kommunikationssystem, umfassend:

Erhalten eines momentanen Kommunikationskanalqualitätsparameters, Senden des Parameters zu einer trainierten Support Vector Machine, SVM, und Verwenden der SVM zum Auswählen eines IR-Statusrückführungszyklus gemäß des momentanen Kanalqualitätsparameters (101);
Einstellen eines IR-Statusrückführungszyklus des ROHC-Kompressors gemäß dem IR-Statusrückführungszyklus, der durch die SVM ausgewählt worden ist (102).

**2.** IR-Statusrückführungszyklusauswahlverfahren nach Anspruch 1, ferner umfassend: vor dem Verwenden der SVM zum Auswählen des IR-Statusrückführungszyklus gemäß dem momentanen Kanalqualitätsparameter
Erhalten eines Probensatzes; und
Verwenden des Probensatzes zum Trainieren der SVM.

**3.** IR-Statusrückführungszyklusauswahlverfahren nach Anspruch 2, wobei das Erhalten des Probensatzes umfasst:

Erhalten eines Probenkanalqualitätsparameters; und
Berechnen eines optimalen IR-Statusrückführungszyklus, der dem Probenkanalqualitätsparameter entspricht.

**4.** IR-Statusrückführungszyklusauswahlverfahren nach Anspruch 3, wobei das Berechnen des optimalen IR-Statusrückführungszyklus, der dem Probenkanalqualitätsparameter entspricht, umfasst:

Berechnen eines Gesamtverstärkungssatzes, der einem Ziel-IR-Statusrückführungszyklussatz entspricht, wenn die Kanalqualität der Probenkanalqualitätsparameter ist;
gemäß dem berechneten Gesamtverstärkungssatz Auswählen des optimalen IR-Statusrückführungszyklus, der dem Probenkanalqualitätsparameter entspricht.

**5.** IR-Statusrückführungszyklusauswahlverfahren nach Anspruch 2, wobei die Verwendung des Probensatzes zum Trainieren der SVM umfasst:

Konstruieren von Trainingsdaten zum Trainieren der SVM, die zwischen zwei IR-Statusrückführungszyklen auswählen kann;
Konstruieren einer Diskriminantenfunktion unter Verwendung der konstruierten Trainingsdaten zum Bestimmen eines Parameters der Diskriminantenfunktion, und korrektes Trennen von zwei Modi, die den zwei IR-Statusrückführungszyklen entsprechen;
Erweitern der SVM zu einer SVM, die zwischen N IR-Statusrückführungszyklen auswählen kann, wobei N eine ganze Zahl von größer als 2 ist.

**6.** Initialisierungs- und Aktualisierungs, IR, -Statusrückführungszyklusauswahlvorrichtung für einen Robust Header Compression, ROHC, -Kompressor in einem Kommunikationssystem, umfassend: ein Auswahlmodul (201) und ein Einstellmodul (202);
wobei das Auswahlmodul zum Erhalten eines momentanen Kommunikationskanalqualitätsparameters, Senden des Parameters zu einer trainierten Support Vector Machine, SVM, und Verwenden der SVM zum Auswählen eines IR-Statusrückführungszyklus gemäß des momentanen Kanalqualitätsparameters ausgebildet ist; und
das Einstellmodul zum Einstellen eines IR-Statusrückführungszyklus des ROHC-Kompressors gemäß dem IR-Statusrückführungszyklus, der durch die SVM ausgewählt worden ist, ausgebildet ist.

**7.** IR-Statusrückführungszyklusauswahlvorrichtung nach Anspruch 6, die ferner ein SVM-Modul umfasst, wobei das SVM-Modul umfasst:

eine Einheit zum Erhalten eines Probensatzes, die zum Erhalten eines Probensatzes ausgebildet ist; und

eine Trainingseinheit, die zum Verwenden des Probensatzes zum Trainieren der SVM ausgebildet ist.

8. IR-Statusrückführungszyklusauswahlvorrichtung nach Anspruch 7, wobei die Einheit zum Erhalten des Probensatzes umfasst:

eine Untereinheit zum Erhalten eines Parameters, die zum Erhalten eines Probenkanalqualitätsparameters ausgebildet ist; und
eine Berechnungsuntereinheit, die zum Berechnen eines optimalen IR-Statusrückführungszyklus, der dem Probenkanalqualitätsparameter entspricht, ausgebildet ist.

9. IR-Statusrückführungszyklusauswahlvorrichtung nach Anspruch 8, wobei die Berechnungsuntereinheit umfasst:

eine Unterheit zum Berechnen einer Gesamtverstärkung, die zum Berechnen eines Gesamtverstärkungssatzes, der einem Ziel-IR-Statusrückführungszyklussatz entspricht, wenn die Kanalqualität der Probenkanalqualitätsparameter ist, ausgebildet ist; und
eine Auswahluntereinheit, die gemäß dem berechneten Gesamtverstärkungssatz zum Auswählen des optimalen IR-Statusrückführungszyklus, der dem Probenkanalqualitätsparameter entspricht, ausgebildet ist.

10. IR-Statusrückführungszyklusauswahlvorrichtung nach Anspruch 7, wobei die Trainingseinheit umfasst:

eine Datenkonstruktionsuntereinheit, die zum Konstruieren von Trainingsdaten zum Trainieren der SVM, die zwischen zwei IR-Statusrückführungszyklen auswählen kann, ausgebildet ist;
eine Funktionskonstruktionsuntereinheit, die zum Konstruieren einer Diskriminantenfunktion unter Verwendung der konstruierten Trainingsdaten zum Bestimmen eines Parameters der Diskriminantenfunktion, und korrekten Trennen von zwei Modi, die den zwei IR-Statusrückführungszyklen entsprechen, ausgebildet ist;
eine Erweiterungsuntereinheit, die zum Erweitern der SVM zu einer SVM, die zwischen N IR-Statusrückführungszyklen auswählen kann, ausgebildet ist,
wobei N eine ganze Zahl von größer als 2 ist.

11. Computerspeichermedium, auf dem computerausführbare Anweisungen gespeichert sind, die, wenn die Anweisungen durch eine Rechenvorrichtung ausgeführt werden, bewirken, dass die Rechenvorrichtung die Verfahren nach einem der Ansprüche 1 bis 5 ausführt.

**Revendications**

1. Procédé de sélection de cycle de retour à un état d'initialisation et d'actualisation, IR, pour un compresseur à compression robuste des en-têtes, ROHC, dans un système de communication, comprenant :

l'obtention d'un paramètre de qualité de canal de communication actuel, l'envoi du paramètre à une machine à vecteur de support, SVM, formée, et l'utilisation de la SVM pour sélectionner un cycle de retour à un état IR selon le paramètre de qualité de canal actuel (101) ;
l'ajustement d'un cycle de retour à un état IR du compresseur ROHC selon le cycle de retour à un état IR sélectionné par la SVM (102).

2. Procédé de sélection de cycle de retour à un état IR selon la revendication 1, comprenant en outre : avant l'utilisation de la SVM pour sélectionner le cycle de retour à un état IR selon le paramètre de qualité de canal actuel,
l'obtention d'un ensemble d'échantillonnages ; et
l'utilisation de l'ensemble d'échantillonnages pour former la SVM.

3. Procédé de sélection de cycle de retour à un état IR selon la revendication 2, dans lequel l'obtention de l'ensemble d'échantillonnages comprend :

l'obtention d'un paramètre de qualité de canal d'échantillonnage ; et
le calcul d'un cycle de retour à un état IR optimal correspondant au paramètre de qualité de canal d'échantillonnage.

4. Procédé de sélection de cycle de retour à un état IR selon la revendication 3, dans lequel le calcul du cycle de retour à un état IR optimal correspondant au paramètre de qualité de canal d'échantillonnage comprend :

le calcul d'un ensemble de gains globaux correspondant à un ensemble de cycles de retour à un état IR cible lorsqu'une qualité de canal est le paramètre de qualité de canal d'échantillonnage ;
selon l'ensemble de gains globaux calculé, la sélection du cycle de retour à un état IR optimal correspondant au paramètre de qualité de canal d'échantillonnage.

**5.** Procédé de sélection de cycle de retour à un état IR selon la revendication 2, dans lequel l'utilisation de l'ensemble d'échantillonnages pour former la SVM comprend :

la construction de données de formation pour former la SVM qui peut établir une sélection entre deux cycles de retour à un état IR ;
la construction d'une fonction discriminante, l'utilisation des données de formation construites pour déterminer un paramètre de la fonction discriminante, et la séparation de deux modes correspondant aux deux cycles de retour à un état IR de façon correcte ;
l'extension de la SVM en tant que SVM qui peut établir une sélection parmi N cycles de retour à un état IR, où N est un nombre entier supérieur à 2.

**6.** Dispositif de sélection de cycle de retour à un état d'initialisation et d'actualisation, IR, pour un compresseur à compression robuste des en-têtes, ROHC, dans un système de communication, comprenant : un module de sélection (201) et un module d'ajustement (202) ;
le module de sélection est conçu pour obtenir un paramètre de qualité de canal de communication actuel, envoyer le paramètre à une machine à vecteur de support, SVM, formée, et utiliser la SVM pour sélectionner un cycle de retour à un état IR selon le paramètre de qualité de canal actuel ; et
le module d'ajustement est conçu pour ajuster un cycle de retour à un état IR du compresseur ROHC selon le cycle de retour à un état IR sélectionné par la SVM.

**7.** Dispositif de sélection de cycle de retour à un état IR selon la revendication 6, comprenant en outre un module SVM, le module SVM comprenant :

une unité d'obtention d'ensemble d'échantillonnages conçue pour obtenir un ensemble d'échantillonnages ; et
une unité de formation conçue pour utiliser l'ensemble d'échantillonnages pour former la SVM.

**8.** Dispositif de sélection de cycle de retour à un état IR selon la revendication 7, dans lequel l'unité d'obtention d'ensemble d'échantillonnages comprend :

une sous-unité d'obtention de paramètre conçue pour obtenir un paramètre de qualité de canal d'échantillonnage ; et
une sous-unité de calcul conçue pour calculer un cycle de retour à un état IR optimal correspondant au paramètre de qualité de canal d'échantillonnage.

**9.** Dispositif de sélection de cycle de retour à un état IR selon la revendication 8, dans lequel la sous-unité de calcul comprend :

une sous-unité de calcul de gains globaux conçue pour calculer un ensemble de gains globaux correspondant à un ensemble de cycles de retour à un état IR cible lorsqu'une qualité de canal est le paramètre de qualité de canal d'échantillonnage ; et
une sous-unité de sélection conçue, selon l'ensemble de gains globaux calculé, pour sélectionner le cycle de retour à un état IR optimal correspondant au paramètre de qualité de canal d'échantillonnage.

**10.** Dispositif de sélection de cycle de retour à un état IR selon la revendication 7, dans lequel l'unité de formation comprend :

une sous-unité de construction de données conçue pour construire des données de formation pour former la SVM qui peut établir une sélection entre deux cycles de retour à un état IR ;
une sous-unité de construction de fonction conçue pour construire une fonction discriminante, utiliser les données de formation construites pour déterminer un paramètre de la fonction discriminante, et séparer deux modes correspondant aux deux cycles de retour à un état IR de façon correcte ;

une sous-unité d'extension conçue pour étendre la SVM en tant que SVM qui peut établir une sélection parmi N cycles de retour à un état IR,

où N est un nombre entier supérieur à 2.

11. Support de stockage par ordinateur sur lequel sont stockées des instructions exécutables par ordinateur qui, lorsque lesdites instructions sont exécutées par un dispositif informatique, amènent le dispositif informatique à réaliser les procédés selon les revendications 1 à 5.

Fig. 1

a current channel quality parameter is
obtained and sent to a trained SVM, and
the SVM is used to select an IR state
return cycle according to the current
channel quality parameter

101

an IR state return cycle of the ROHC
compressor is adjusted according to the
IR state return cycle selected by the SVM

102

Fig. 2

input space

characteristic space

function

Fig. 3

Fig. 4

**EP 3 211 850 B1**

## REFERENCES CITED IN THE DESCRIPTION

**Patent documents cited in the description**

- US 2006104266 A1